# EUROPEAN PATENT SPECIFICATION

(11) **EP 0 943 910 B1**
(45) Date of publication and mention of the grant of the patent: **21.06.2006**
(21) Application number: 99102278.1
(22) Date of filing: 05.02.1999
(51) Int. Cl.: G01M 19/00, G01R 31/28

(54) **Rapid performance testing method for refrigeration appliances**
Schnelles Funktionsprüfverfahren für Kühlgeräte
Procédé d'essai fonctionnel rapide d'appareils frigorifiques

(30) Priority: 16.03.1998 IT PN980020
(43) Date of publication of application: 22.09.1999
(73) Proprietor: Electrolux Zanussi S.p.A., 33170 Pordenone (IT)
(72) Inventor: Barabesi, Silvano, 50126 Firenze (IT)
(74) Representative: Giugni, Valter

(56) References cited:
- EP-A- 0 572 940
- US-A- 4 275 451
- US-A- 5 511 004

## Description

The present invention refers to a method for rapidly testing the performance of refrigeration appliances, in particular household refrigeration appliances with compressor-type refrigerating circuit.

Large-scale manufacturing of home appliances such as refrigerators and the like is largely known to usually involve the same appliances being subjected to a double set of performance test runs, wherein a first testing procedure includes a number of accurate laboratory type tests and the second testing procedure takes on the contrary place on the production line and is aimed to enable, usually by means of statistical-type systems and criteria, the totality of the produced appliances to be thoroughly checked for actual performance and operation capability.

Performance testing plants for refrigeration appliances are for instance known which comprise discriminating capabilities between acceptable appliances and appliances to be rejected based on methods of computer-assisted processing of statistical-type measurements, such as for instance A'GRAMKOW's CPT-6000 system, and enable the appliances to undergo a complete performance testing procedure in quite a short period of time, however in a manner that quite often is no better than relatively reliable.

In particular, statistical-type testing systems involve definite problems in the definition of the acceptable/reject discrimination thresholds owing to the many variables that may be implied in such a high-output industrial manufacturing processes. It therefore ensues that a certain percentage of "acceptable" appliances are on the contrary likely to be considered "rejectable" if the system is set and adjusted to conservative, ie. prudent standards as far as the good operating and performance quality of the product is concerned conversely, a number of functionally inadequate appliances may be erroneously considered "acceptable" and passed by the system. In any case, the drawbacks connected with these systems are fully apparent. For example, if the system is set and adjusted to said conservative or prudent assessment standards, the need arises for the appliances having so been considered "rejectable" to be re-tested, for generally much longer periods of time, only to actually find out that a significant percentage thereof turns eventually out to be really satisfactory, ie. functionally "acceptable".

This of course has the effect of thwarting a large part of the operational, ie. management-related advantages for which it would on the contrary be desirable for such performance testing procedures to be carried out in as short a time as possible.

A further drawback connected with testing methods based on statistical-type processing criteria lies in the need for an adequately large, ie. extensive data bank to be re-created each time that the appliance design or the conditions on which the appliance design are based undergo modifications (eg. in the case of refrigerators, the type of coolant medium. the type of compressor, the characteristics of the evaporator, etc.). As a matter of fact, the creation of such a data bank for statistical-type processing tasks turns out in all cases to be quite time-demanding and expensive, since it must take the whole variety of design and production testing conditions into due account (such as, for instance, voltage and/or ambient temperature variations, processing or manufacturing tolerances, etc.).

It therefore conclusively ensues that prior-art systems fail to prove fully satisfactory in those cases in which they are required to ensure very high standards of reliability with short-lasting tests, ie. tests capable of being carried out quickly, while anyway imposing a time-consuming, expensive work for re-defining the standards each time that the model ranges of the appliances to be tested are updated according to a practice that is becoming increasingly frequent to comply with the current market needs and requirements. On the other hand, the possibility for a testing procedure to be carried out in a short period of time is of paramount importance in view of a general reduction in large-scale manufacturing costs.

US-A-S 483 170 discloses a method and a related apparatus for detecting faults in integrated circuits, wherein a so-called neural network is "trained" to tell acceptable integrated circuits from faulty ones, ie. integrated circuits that must on the contrary be rejected, on the basis of an analysis of a current output from the same circuits. In particular, the integrated circuits are tested by making use of a single test vector. Such a solution enables digital, analgue or hybrid integrated circuits to be easily tested, but it has really nothing to do with the testing of appliances such as refrigerators and the like.

EP 0572 940 A2 discloses an automatic functional test system for household electrical appliances.

It therefore is a main purpose of the present invention to provide a rapid performance testing method for refrigeration appliances that is capable of being carried out in really short periods of time to particularly high standards of reliability.

A further purpose of the present invention is to provide a testing method of the above cited kind which is capable of allowing for a flexible adaptation to any possible variation occurring in high-output industrial manufacturing processes, so as to therefore prove to be easily and quickly adaptable to the various, different needs that may arise from time to time.

According to the present invention, these aims are reached in a rapid performance testing method for refrigeration appliances as claimed in claim 1.

The novel features and advantages of the invention will be more readily understood from the description that is given below by way of non-limiting example with reference to the accompanying drawings, in which:
- Figure 1 is a schematical view of the refrigerating circuit of one of the appliances being subjected to testing, as associated to means used to monitor some operating quantities thereof;
- Figure 2 is a partial, schematical top view of a refrigeration appliance production line adapted to carry out the testing method according to the present invention;
- Figure 3 is a schematical view of the structure of a neural network capable of being used in accordance with the present invention.

The refrigeration appliances to be tested are preferably household refrigerating appliances, ie. refrigerators 4 of the type comprising a refrigerating circuit provided with a compressor 5, wherein at least a condenser 8 and at least an evaporator 9 mutually connected via a capillary tube 10, or similar device capable of throttling the flow of refrigerant medium, are connected in series between the outlet 6 and the inlet 7 of said compressor. In a preferred manner, said circuit comprises a filter-dehydrator 11 as well.

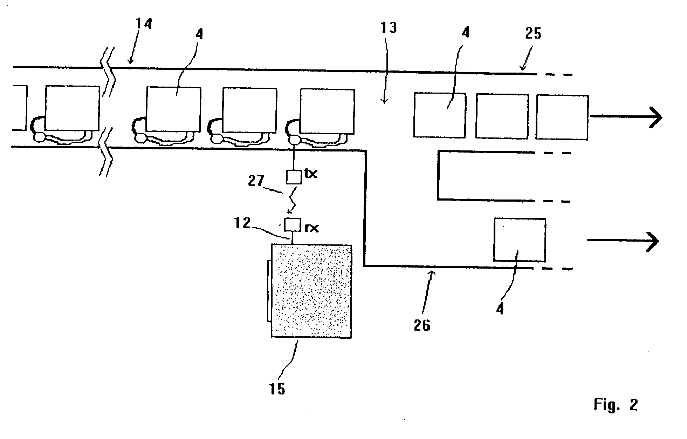

The refrigerators 4 are manufactured on at least a production line that in its final portion includes a testing station 14 and a commutation station 13 capable of sequentially receiving a plurality of refrigerators 4 being carried forward by a conveyor belt or similar arrangement (Figure 2).

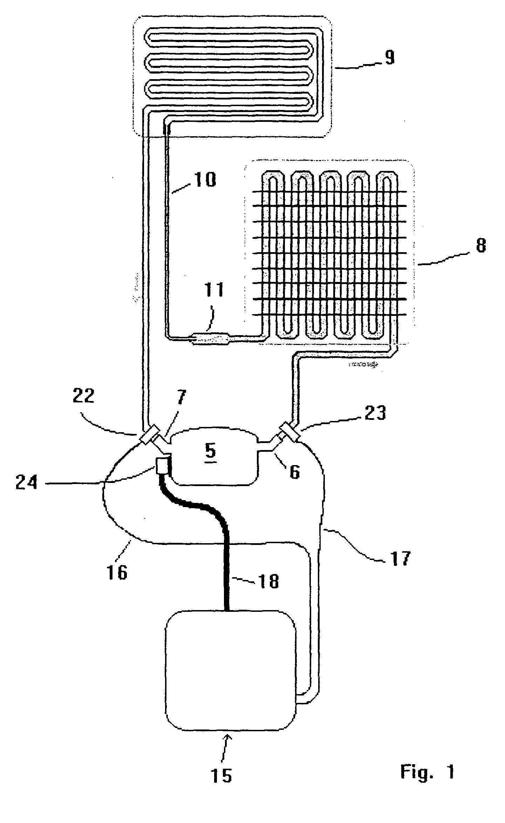

The testing station 14, to which all refrigerators flowing in from the production line preferably come, may of course be of the carousel-type connected as a branching-off to said commutation station. In any case, the testing station 14 is associated to one or more data-processing means which are generally indicated at 15 in Figure 1 and are provided with respective driving inputs 16, 17, 18. In Figure 2, all inputs of said data-processing means 15 are generally indicated at 12 for reasons of greater simplicity.

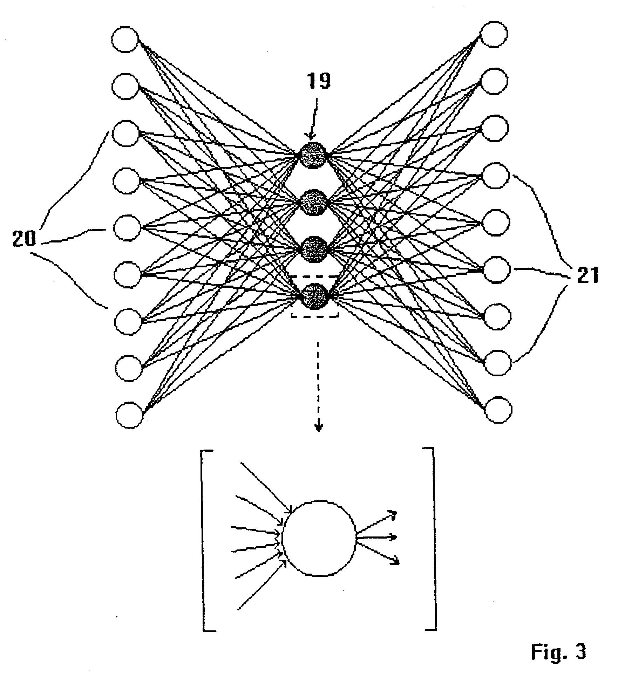

The above cited data-processing means 15 are of the type comprising neural networks, preferably multi-layered neural networks with a self-associator based architecture, as this is illustrated by way of example in Figure 3, which are 'trained' to reproduce at their output the data vector appearing at their input, and which, in a per se known manner, are adapted to solve problems in which the physical laws correlating the various variable quantities under examination are particularly complex or even unknown. Such neural networks are of the so-called classifier type, ie. they are also able to store sample reference information during an initial 'learning' phase.

In particular, Figure 3 illustrates a neural network that has a hidden layer 19 and is provided with nine inputs 20 and nine outputs 21. Even different neural networks might anyway be used in the particular application, such as for instance neural networks having eighteen inputs and eighteen outputs. In any case, the processing means 15 form with said multi-layered neural networks an adaptive assessment system that according to the present invention is used as this is described in greater detail farther on.

In said testing station 14, each one of the refrigerators 4 is switched on, ie. put into operation, and respective probes 22 and 23 drive the inputs 16 and 17, respectively, of the processing means 15 in response to the temperature detected at the suction pipe 7 of the compressor 5 and the temperature detected at the outlet 6 of the same compressor, respectively. Furthermore, an appropriate transducer 24 (eg. a wattmeter or the like) drives the input 18 of the processing means 15 with a signal that is proprotional to the power input of the compressor 5. The probes 22. 23 and the transducer 24 are of course applied in a removable manner in the corresponding measurement points of the refrigerators 4.

As a matter of fact, therefore, the processing means 15 are driven on the basis of quantities that are indicative of the temperature T0 of the refrigerant medium at the inlet 7 of the compressor 5, the temperature T1 of the refrigerant medium at the outlet 6 of the compressor 5, as well as the power input P of the compressor 5. It should be noticed that such a power input P represents the work carried out by the compressor 5 to operate the remaining portion of the refrigerating circuit 8-11 by delivering thereinto refrigerant medium under pressure at a temperature T1 and receiving in return, at its inlet 7, refrigerant medium at a temperature T0. As a result, the combination of the quantities being measured T0, T1 and P is automatically indicative of the functional performance of the entire refrigerating circuit 5-11 and, therefore, the existence of any possible faulty condition that might impair the overall functional performance capabilities of the refrigerator.

Based on these considerations, the processing means 15 using neural networks are arranged to detect, at their input side, the evolution versus time of the quantities T0, T1 and P during a pre-determined functional transient of each one of the refrigerators 4 being tested, wherein such a transient may for example have a duration of approx. ten minutes. In a preferred manner, said quantities start to be detected, during the testing period, after approx. five minutes from the appliances being switched on and started, while fully testing each single refrigerator may take up an overall period of time that is not in excess of 20 minutes. Testing, therefore, takes place preferably, but not exclusively, within a short initial period of operation of the refrigerators, ie. when they have not substantially reached their steady-state conditions yet.

The adaptive assessment system comprising said processing means 15 with self-associator based neural networks is adapted to process in a combined manner the afore cited evolutions versus time of said detected quantities T0, T1 and P (by making use of an algorithm that is well within the abilities of those skilled in the art and is not a part of the present invention) in such a manner as to assess the overall tendential functional performance of each refrigeration appliance being tested. Such a processing of the evolution versus time of the monitored quantities T0, T1 and P is carried out with respect to the combination of corresponding sample evolutions supplied to the neural-network classifier in a per se known manner during an initial learning phase, as this has already been set firth earlier in this description.

In this connection, it should be noticed that the short-lasting testing procedure according to the present invention is not intended to carry out any restrictive test of a deterministic type (by assessing the accuracy of particular engineering or design quantities), but - thanks also to the mature and time-proven technologies used in the manufacturing of modern refrigerators - is only aimed at checking the refrigerators being tested for their actual capability of ensuring an adequate overall performance level. In other words, the testing method according to the present invention is capable, in a very short time and within a high-output industrial manufacturing process, of checking the refrigerators for their ability to perform their primary task, ie. to ensure an adequate storage of the food products as required.

Based on the different test results emerging from such a testing procedure it is therefore possible for the refrigeration appliances 4 that tend to reach a pre-determined overall performance standard to be most easily discriminated from the possible ones that on the contrary appear to be unable to reach such a standard. In a per se known manner, therefore, the refrigerators that at the end of said short testing procedure are transferred from the testing station 14 to the commutation station 13 can be sent on to either the subsequent manufacturing phase or an overhaul/repair station, in accordance with their test outcome, along respective conveyance lines 26, 26.

As this has been found out also experimentally, the testing method according to the present invention based on the use of adaptive assessment means built around neural networks enables a system to be implemented which is capable of flexibly adapting to all possible variations that may intervene within a high-output industrial manufacturing process. Such an adaptability is in fact a peculiar feature of the systems based on neural networks, while no need arises, with the testing method according to the present invention, for discrimination thresholds to be defined for each one of the engineering or design quantities being monitored, since it is actually the manner in which said quantities combine with each other during the testing period that determines the outcome of the test. All that is required in this connection is therefore letting the neural-network classifier learn initially (on the basis of a set of certainly 'good' samples) the correct manner in which the various quantities must combine.

In an advantageous manner, this involves desensitizing the system towards those variables that are usually encountered in industrial processes, but do not play any role in generating or determining faulty conditions in the appliances being produced.

The utilization of an adaptive system furthermore enables the assessment system itself to be updated even at later periods; in this connection, it in fact only takes proposing further learning patterns (ensuring a known performance or functional outcome) to the system for the latter to be updated according to new requirements and circumstances.

Conclusively, it can therefore be stated that the testing method according to the present invention enables actual faults to be identified within a high-output industrial manufacturing process to such reliability levels as surprisingly almost 100%, as this has also been found experimentally. What's more, such a result is advantageously reached in a particularly short period of time, owing to the fact that the need actually arises for the appliances 4 to be only monitored during an initial transient of their operation, without any need to wait for the same appliances to reach steady-state operation conditions, as this has already been set forth earlier in this description. As a matter of fact, based on the comparison of the combined evolution of the monitored quantities with the corresponding evolution pattern of the sample reference quantities (learnt from known operation examples), the assessment system based on neural networks is capable of using said short operation transient of the appliances to most accurately tell whether the appliances 4 are able to reach an adequante overall performance level under steady-state conditions of operation, as pre-determined on the basis of laboratory-scale type tests.

Since refrigeration appliances are largely known to usually reach steady-state operating conditions after a few hours of operation, the resulting time saving effect can be plainly appreciated. All this of course translates into a rapid, simple, flexible and, therefore, cost-effective overall industrial, ie. process management capability.

It will further be appreciated that the above described rapid performance testing method may undergo any of a number of possible modifications without departing from the scope of the present invention.

With reference to Figure 2, for example, the inputs 12 of the processing means 15 may be arranged so as to be driven by the probes 22, 23 and the transducer 24 via an infrared or similar transceiver apparatus (generally indicated at 27 in Figure 2) so as to avoid any mechanical link between the testing station 14 and the same processing means, wherein the implementation of such a driving function via a transceiver is well within the ability of those skilled in the art.

Furthermore, the quantities that are monitored to testing purposes may be different and/or differently combined, or combined in a different number, with respect to the afore described ones. From the experimental findings it has anyway clearly emerged that, for a test to be carried out to adequate standards of reliability in such a short a period of time, the need arises for the evolution versus time to be monitored of even only one of the characteristic functional quantities of the refrigerating circuit 5-11, wherein such an evolution shall then be processed by the neural-network based assessment system against at least a corresponding sample evolution. Even by only monitoring the evolution of a single significant quantity, in fact, the adaptive neural-network based assessment system is capable of rapidly deciding (on the basis of what it has previously learned from known operation patterns, as this has already been explained earlier in this description) whether the appliances being tested tend to reach such a pre-determined overall performance level as to enable the same appliances to be rated "good" and, therefore pass the test.

In a preferred manner, anyway, it is at least the evolution versus time of the temperature T0 of the refrigerant medium at the inlet 7 of the compressor 5 that will be monitored in that connection.

As already set forth above, such an evolution versus time of the temperature T0 may be processed in combination with the corresponding evolution pattern of the temperature T1 and/or the power input P and/or any further significant quantity, as compared with corresponding sample patterns, in such a manner as to increase testing reliability.

One of such further significant quantities may for instance be the temperature T2 at the end of the condensation process of the refrigerant medium, wherein such a temperature may for instance be measured in a per se known manner by means of a probe (not shown) in a point of the refrigerating circuit 5-11 that lies close to that extremity of the condenser 8 which is connected to the capillary tube 10.

## Claims

1. Rapid performance testing method for refrigeration appliances, each of the refrigeration appliances comprises a refrigerating circuit (5-11) including a compressor (5) with an outlet (6) and an inlet (7) between which there are arranged in series at least a condenser (8) and at least an evaporator (9) mutually connected to each other via means (10) for throttling the flow of refrigerant medium, wherein the method comprises the phases in which:
- for each of the refrigeration appliances (4) the evolution versus time of at least a first characteristic functional quantity (T0; T1; T2; P) of the corresponding refrigerating circuit (5-11) is detected during at least a predetermined operation transient thereof;
- each said measured evolution versus time is evaluated against a corresponding sample evolution by means of an assessment system based on neural networks, so that the overall functional performance of each of the refrigeration appliances under test can be determined; and
- the refrigeration appliances (4) that are found to tend to reach a predetermined overall performance level are discriminated from possible refrigeration appliances (4) that fail to tend to reach such a level.

2. Testing method according to claim 1, **characterized in that** said first characteristic functional quantity of the refrigerating circuit (5-11) includes the temperature (T0) of the refrigerant medium at the inlet (7) of the compressor (5).

3. Testing method according to claim 2, **characterized in that** for each of said refrigeration appliances (4) the evolution versus time is also detected, during said predetermined operation transient, of at least a further quantity that is indicative of the temperature (T1) of the refrigerant medium at the outlet (6) of the compressor (5), wherein said evolution versus time of said first and said further quantities (T0, T1) is then evaluated in a combined manner against corresponding sample evolutions so as to determine the overall performance of each of the refrigeration appliances under test.

4. Testing method according to claim 2, **characterized in that** for each of said refrigeration appliances (4) the evolution versus time is also detected, during said predetermined operation transient, of at least a further quantity that is indicative of the power input (P) to the compressor (5), wherein said evolution versus time of said first and said further quantities (T0, P) is then evaluated in a combined manner against corresponding sample evolutions so as to determine the overall performance of each of the refrigeration appliances under test.

5. Testing method according to claim 2, **characterized in that** for each of said refrigeration appliances (4) the evolution versus time is also detected, during said predetermined operation transient, of at least a further quantity that is indicative of the temperature (T2) of the refrigerant medium at the end of the condenser (8), said end being connected to the means (10) throttling, wherein said evolution versus time of said first and said further quantities (T0, T2) is then evaluated in a combined manner against corresponding sample evolutions so as to determine the overall performance of each of the refrigeration appliances under test.

6. Testing method according to claim 1, **characterized in that** the evolution versus time of said first characteristic functional quantity (T0; T1; P; T2) is detected, during said predetermined operation transient, when the refrigeration appliances (4) under test have not yet substantially reached steady-state operating conditions.

7. Testing method according to claim 1, **characterized in that** processing of said evolution versus time of said first characteristic functional quantity (T0; T1; P; T2) is carried out by means of multi-layer neural networks of the adaptive type with self-associator architecture (19-21).

## Patentansprüche

1. Schnellverfahren zur Prüfung der Leistungsfähigkeit von Kühlgeräten, bei welchem jedes dieser Kühlgeräte einen Kühlkreis (5 - 11) umfasst, zu welchem ein Verdichter (5) mit einer Austrittsöffnung (6) und einer Eintrittsöffnung (7) gehört, zwischen denen hintereinander mindestens ein Kondensator (8) und mindestens ein Verdampfer (9) angeordnet sind, die untereinander über Mittel (10) zur Drosselung der Strömung des Kühlmittels verbunden sind, wobei dieses Verfahren die folgenden Phasen umfasst, in denen
- für jedes der Kühlgeräte (4) der zeitliche Verlauf von mindestens einer ersten kennzeichnenden funktionellen Größe (T0, T1, T2, P) des zugehörigen Kühlkreises (5- 11) während mindestens einer im Voraus festgelegten Übergangsphase seines Betriebs erfasst wird;
- jeder genannte, messtechnisch erfasste zeitliche Verlauf im Vergleich mit einem zugehörigen Musterverlauf mittels eines Bewertungssystems, welches auf neuralen Netzen beruht, dergestalt ausgewertet wird, dass die gesamte funktionelle Leistungsfähigkeit eines jeden der Prüfung unterzogenen Kühlgeräte ermittelt werden kann; und
- diejenigen Kühlgeräte (4), bei denen man herausgefunden hat, dass sie die Tendenz haben, ein vorher festgelegtes Niveau der Gesamtleistungsfähigkeit zu erreichen, von denjenigen möglichen Kühlgeräten (4) unterschieden werden, die nicht die Tendenz haben, ein derartiges Niveau zu erreichen.

2. Prüfverfahren gemäß Anspruch 1, **dadurch gekennzeichnet, dass** zur genannten ersten kennzeichnenden funktionellen Größe des Kühlkreises (5 - 11) die Temperatur (T0) des Kühlmittels an der Eintrittsöffnung (7) des Verdichters (5) gehört.

3. Prüfverfahren gemäß Anspruch 2, **dadurch gekennzeichnet, dass** für jedes der genannten Kühlgeräte (4) während der genannten, im Voraus festgelegten Übergangsphase des Kühlgerätebetriebs der zeitliche Verlauf auch für mindestens eine weitere Größe, die für die Temperatur (T1) des Kühlmittels an der Austrittsöffnung (6) des Verdichters (5) indikativ ist, ermittelt wird, wobei der genannte zeitliche Verlauf der genannten ersten Größe und der genannten weiteren Größen (T0, T1) dann auf eine kombinierte Art und Weise im Vergleich mit entsprechenden Musterverläufen dergestalt ausgewertet wird, dass die Gesamtleistungsfähigkeit eines jeden der Prüfung unterzogenen Kühlgeräte ermittelt wird.

4. Prüfverfahren gemäß Anspruch 2, **dadurch gekennzeichnet, dass** für jedes der genannten Kühlgeräte (4) während der genannten, im Voraus festgelegten Übergangsphase des Kühlgerätebetriebs der zeitliche Verlauf auch für mindestens eine weitere Größe, die für die Druckeingangsgröße (P) zum Verdichter (5) indikativ ist, ermittelt wird, wobei der genannte zeitliche Verlauf der genannten ersten Größe und der genannten weiteren Größen (T0, P) dann auf eine kombinierte Art und Weise im Vergleich mit entsprechenden Musterverläufen dergestalt ausgewertet wird, dass die Gesamtleistungsfähigkeit eines jeden der Prüfung unterzogenen Kühlgeräte ermittelt wird.

5. Prüfverfahren gemäß Anspruch 2, **dadurch gekennzeichnet, dass** für jedes der genannten Kühlgeräte (4) während der genannten, im Voraus festgelegten Übergangsphase des Kühlgerätebetriebs der zeitliche Verlauf auch für mindestens eine weitere Größe, die für die Temperatur (T2) des Kühlmittels am Ausgang des Kondensators (8) indikativ ist, ermittelt wird, wobei der genannte Ausgang mit dem Mittel (10) zur Drosselung verbunden ist und wobei der genannte zeitliche Verlauf der genannten ersten Größe und der genannten weiteren Größen (T0, T2) dann auf eine kombinierte Art und Weise im Vergleich mit den Musterverläufen dergestalt ausgewertet wird, dass die Gesamtleistungsfähigkeit eines jeden der Prüfung unterzogenen Kühlgeräte ermittelt wird.

6. Prüfverfahren gemäß Anspruch 1, **dadurch gekennzeichnet, dass** während der genannten, im Voraus festgelegten Übergangsphase des Kühlgerätebetriebs der zeitliche Verlauf der genannten ersten kennzeichnenden funktionellen Größe (T0, T1, P, T2) erfasst wird, wenn die der Prüfung unterzogenen Kühlgeräte (4) die Betriebsbedingungen des stationären Zustandes dem Wesen nach noch nicht erreicht haben.

7. Prüfverfahren gemäß Anspruch 1, **dadurch gekennzeichnet, dass** die Verarbeitung des genannten zeitlichen Verlauf der genannten ersten kennzeichnenden funktionellen Größe (T0, T1, P, T2) mit Hilfe von mehrschichtigen neuralen Netzen vom adaptiven Typ mit Selbstassoziatorarchitektur (19 - 21) durchgeführt wird.

## Revendications

1. Procédé d'essai fonctionnel rapide d'appareils frigorifiques, chacun des appareils frigorifiques comprenant un circuit frigorifique (5-11) comprenant un compresseur (5) avec une sortie (6) et une entrée (7) entre lesquelles sont placés en série au moins un condenseur (8) et au moins un évaporateur (9) reliés l'un à l'autre par le biais de moyens (10) pour étrangler l'écoulement de fluide réfrigérant, dans lequel le procédé comprend des phases dans lesquelles :
- pour chacun des appareils frigorifiques (4), l'évolution en fonction du temps d'au moins une première quantité fonctionnelle caractéristique (T0 ; T1 ; T2 ; P) du circuit frigorifique (5-11) correspondant est détectée durant au moins une phase transitoire de fonctionnement prédéterminée de celui-ci ;
- chaque dite évolution mesurée en fonction du temps est évaluée par rapport à une évolution type correspondante au moyen d'un système d'évaluation basé sur des réseaux neuronaux, de sorte que les performances fonctionnelles globales de chacun des appareils frigorifiques testés peuvent être déterminées ; et
- les appareils frigorifiques (4) qui s'avèrent avoir tendance à atteindre un niveau de performances globales prédéterminé sont séparés des éventuels appareils frigorifiques (4) qui n'atteignent pas un tel niveau.

2. Procédé d'essai selon la revendication 1, **caractérisé en ce que** ladite première quantité fonctionnelle caractéristique du circuit frigorifique (5-11) comprend la température (T0) du fluide réfrigérant à l'entrée (7) du compresseur (5).

3. Procédé d'essai selon la revendication 2, **caractérisé en ce que**, pour chacun desdits appareils frigorifiques (4), on détecte également l'évolution en fonction du temps, durant ladite période transitoire de fonctionnement prédéterminée, d'au moins une autre quantité qui est représentative de la température (T1) du fluide réfrigérant à la sortie (6) du compresseur (5), dans lequel ladite évolution en fonction du temps de ladite première et de ladite autre quantité (T0, T1) est alors évaluée de façon combinée par rapport à des évolutions types afin de déterminer les performances globales de chacun des appareils frigorifiques testés.

4. Procédé d'essai selon la revendication 2, **caractérisé en ce que**, pour chacun desdits appareils frigorifiques (4), on détecte également l'évolution en fonction du temps, durant ladite période transitoire de fonctionnement prédéterminée, d'au moins une autre quantité qui est représentative de la puissance d'entrée (P) du compresseur (5), dans lequel ladite évolution en fonction du temps de ladite première et de ladite autre quantité (T0, P) est alors évaluée de façon combinée par rapport à des évolutions types afin de déterminer les performances globales de chacun des appareils frigorifiques testés.

5. Procédé d'essai selon la revendication 2, **caractérisé en ce que**, pour chacun desdits appareils frigorifiques (4), on détecte également l'évolution en fonction du temps, durant ladite période transitoire de fonctionnement prédéterminée, d'au moins une autre quantité qui est représentative de la température (T2) du fluide réfrigérant à l'extrémité du condenseur (8), ladite extrémité étant reliée aux moyens (10) d'étranglement, dans lequel ladite évolution en fonction du temps de ladite première et de ladite autre quantité (T0, T2) est alors évaluée de façon combinée par rapport à des évolutions types afin de déterminer les performances globales de chacun des appareils frigorifiques testés.

6. Procédé d'essai selon la revendication 1, **caractérisé en ce que** l'évolution en fonction du temps de ladite première quantité fonctionnelle caractéristique (T0 ; T1 ; P ; T2) est détectée, durant ladite période transitoire de fonctionnement prédéterminée, quand les appareils frigorifiques (4) testés n'ont pas encore atteint sensiblement des conditions de fonctionnement stables.

7. Procédé d'essai selon la revendication 1, **caractérisé en ce que** le traitement de ladite évolution en fonction du temps de ladite première quantité fonctionnelle caractéristique (T0 ; T1 ; P ; T2) est effectué au moyen de réseaux neuronaux multicouches du type adaptatif à architecture auto-associative (19-21).
